# EUROPEAN PATENT APPLICATION

(11) **EP 2 567 775 A2**
(43) Date of publication of application: **13.03.2013**
(21) Application number: 12183038.4
(22) Date of filing: 05.09.2012
(51) Int. Cl.: B23K 26/38, B23K 26/42

(54) **Method of drilling through a wall of a hollow component**

(30) Priority: 06.09.2011 GB 201115354
(71) Applicant: Rolls-Royce plc, London SW1E 6AT (GB)
(72) Inventor: Cuttell, Martyn, Derby, DE22 2FZ (GB)
(74) Representative: Hill, Matthew Ross

(57) **Abstract**

A method of drilling a hole (20) in a wall of a component (10), the component (10) defining a cavity (12) having a surface, the method having the steps of: inserting a two-phased material (104) into the cavity; inserting at least one solid element (102) of energy beam (22) resistant material into the cavity; solidifying the two-phased material (104) to secure the solid element (102) in a fixed position; and drilling the hole (20) with an energy beam (22) wherein the surface of the cavity is protected from damage by at least one of the two-phase material or the solid element of energy beam resistant material.

## Description

The present invention relates to laser drilling of hollow components. In particular, but not exclusively, the invention relates to the laser drilling of holes in components for gas turbine engines such as turbine blades or nozzle guide vanes.

It has been known to use laser beams to drill holes in components for some time. The technique is particularly useful for drilling very small holes, such as cooling air holes, which are required on components such as turbine blades or nozzle guide vanes. The cooling air feeding the cooling air holes is forced through one or more cavities in the component making the component hollow.

Despite being an efficient and effective way of drilling the holes problems can arise during manufacturing. Due to the hollow nature of the components, a laser beam that has completely penetrated the wall, through which a hole is desired, will strike and cause damage to the opposite wall of the cavity. This impingement of the laser beam on the opposite wall is commonly known as 'back strike'. The act of vaporisation and melting by the laser beam during hole drilling may also cause deposits of material in a sputtering action inside of the cavity. Simply reducing the power of the laser beam to counter these problems may mean a hole of inferior quality will be produced and extending manufacturing times.

A method of laser beam blocking to reduce cavity damage to hollow components has been exhibited for the drilling of cooling holes that are required in nozzle guide vanes of gas turbine engines. The aerofoil sections, and therefore the cavities of nozzle guide vanes, tend to be relatively larger than those of turbine blades. This extra volume allows solid strips of material to be inserted into the cavities and placed against the opposite wall. Commonly, the strips used are solid polytetrafluoroethylene (PTFE), which has been found to be one of the more effective laser beam blocking materials. Where the PTFE strips are thick enough, and provide good coverage of the area to be drilled, they are relatively effective at preventing 'back strike' in the cavity. They are not, however, totally effective, especially where the cavity becomes smaller and more intricate. This is because the strips can only be inserted in a nearly line-of-sight assessable passage. The PTFE strips are also limited in size to the dimensions of the smallest orifice through which they must enter the cavity. Also these PTFE strips are only capable of protecting a surface in direct line-of-sight of the laser and are therefore limited in applications such as turbine blades and vanes where the drilled wall is arcuate and an array of cooling holes may mean diverging laser drilling angles and outside the area covered by the PTFE strip.

The presence of the PTFE laser blocking strip allows laser trepan drilling of the nozzle guide vanes. Trepan drilling involves piercing and moving the laser beam relative to the component to 'cut out' the hole. This allows the hole to have a controlled taper, meet a relatively high tolerance requirement and have a clean surface finish. This is in contrast to laser percussion drilling which involves adjusting the laser spot size according to the required final hole size and having no relative motion between the laser beam and the component. Laser trepan drilling produces holes which match more closely holes that have been drilled using the electrical discharge machining (EDM) method, exhibiting better roundness, parallelism and hole diameter characteristics.

Percussion drilling usually involves an array of holes drilled in a series of passes. The laser beam power level and the number of laser pulses (i.e. time), for which the laser is held at each hole in the array, is determined for each drilling pass. Peak power levels and number of pulses correlate with the quality of hole produced. For this reason percussion drilling generally produces a hole of weaker tolerance and lower quality when compared with a trepan drilled hole.

The intricate cavity geometry of turbine blades does not lend itself to the use of PTFE strips to prevent back strike. This is especially true in the generally smaller high pressure turbine blades. The intricate core passages for delivering cooling air to the walls of the turbine blades are rarely large enough to allow insertion of sufficiently thick, and therefore useful, PTFE strips. Because an effective laser blocker such as PTFE cannot be used, trepan laser drilling is much more likely to cause 'back strike' to intricate cavities employing alternative laser blocking techniques. For this reason, cooling holes are generally EDM or percussion laser drilled on turbine blades. Where percussion laser drilling is used, it tends to be difficult to measure or gauge the drilled holes, meaning the turbine blades require functional testing.

A number of different barriers have been tried to block the laser beam in intricate cavities. Waxes have been tried where a wax in liquid form is dispensed into the cavity. Allowing the wax to solidify or freeze forms a fixed barrier matching the intricate contours of the cavity. Removal of the wax after the drilling process can be difficult, often necessitating the use of steam autoclaves. Additionally, the use of waxes has not been found to be particularly effective at impeding the laser beam.

Another method of providing a liquid to the cavity, which then solidifies, is disclosed in European Patent Application 2,017,029. In this application the use of compound based on a sol-gel is used. The compound is resilient to the laser beam. The sol-gel exhibits a two-phase form, that of a liquid and then a gel. The sol-gel has a dispersion of particulate material forming a colloidal suspension within the sol (solution). Cooling the sol-gel below its gelation temperature transforms the sol into a gel or solid and fixes the dispersed particles in place. The particles are a ceramic, usually of a fine powder form, and the sol-gel is based on a silica sol. The resulting gel or solid may then be dried and, optionally, the ceramic powder sintered.

The position fixed ceramic powder acts to block the laser beam during the hole drilling process. The green form or sintered filler must then be removed from the cavity. While the use of a sol-gel in this manner is useful in ensuring the dispersed particles fill the entire cavity in the liquid phase, the solidified filler remains ineffective in preventing damage to the cavity if trepan laser drilling is used to form holes in the component.

It is an object of the invention to provide a method of laser drilling a hole in a hollow component utilising an effective barrier in the cavity of the component to protect the surface of the cavity from damage.

According to an aspect of the invention there is provided method of drilling a hole in a wall of a component, the component defining a cavity having a surface, the method having the steps of: inserting a two-phased material into the cavity; inserting at least one solid element of energy beam resistant material into the cavity; solidifying the two-phased material to secure the solid element in a fixed position; and drilling the hole with an energy beam wherein the surface of the cavity is protected from damage by at least one of the two-phase material or the solid element of energy beam resistant material.

The solid element may be positioned away from the surface of the cavity.

The solid element may be positioned nearer the drilled wall than the away from the surface of the cavity being protected from damage.

Two or more solid elements may be inserted into the cavity.

The solid element may be inserted into the cavity and then the two-phased material is inserted into the cavity.

The two-phased material may be inserted into the cavity and then the solid element is inserted into the cavity.

The method may comprise the step of capturing drilling particulates within the two-phase material.

The method may comprise the step of removing the two-phase material and the solid element from the cavity.

The solid element may be polytetrafluoroethylene (PTFE).

The solid element may be a polytetrafluoroethylene (PTFE) strip. The solid element may be a polytetrafluoroethylene (PTFE) elongated strip. The polytetrafluoroethylene strip may be elongated such that it is longer than it is wide.

The two-phased material may be a wax.

The two-phased material may be a sol-gel based compound.

The sol-gel may be silica or alumina based sol.

The sol-gel based compound may comprise a particulate material dispersed within the sol.

The particulate material may be a ceramic or a glass material.

The method may comprise the step of solidifying the two-phased material forms a gel from the sol-gel based compound.

The gel may secure the particulate in an un-sintered green form.

The method may further comprise sintering the green-form.

The method may comprise the step of removing the two-phase material and the solid element from the cavity is performed by washing and/or leaching.

The energy beam may be a laser beam.

The component may be a component for a gas turbine engine, such as a turbine blade or vane.

The above and other aspects of the invention will now be described, by way of example only, with reference to the accompanying figures, in which:
FIG. 1 is a section through an aerofoil portion of a turbine blade suitable for being drilled by a laser; and
FIG. 2 is a section through an aerofoil portion of a turbine blade suitable for being drilled using the method of the present invention.

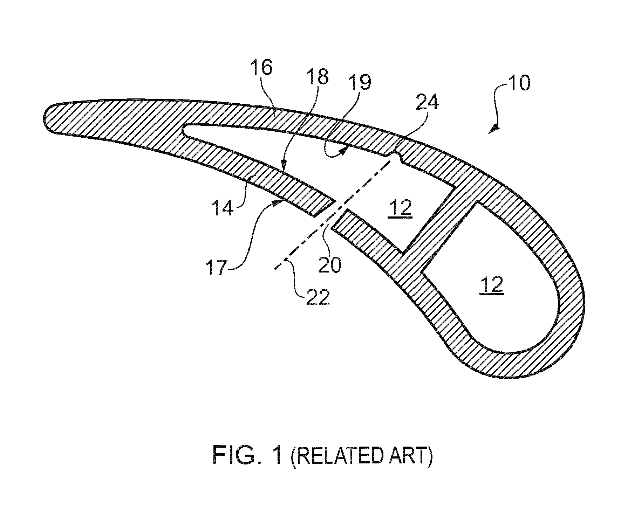

Referring to FIG. 1 where a section through a turbine blade 10 is shown. The turbine blade 10 has at least one cavity 12 bounded, in part, by a first wall 14 and a second wall 16. The cavity 12 extends from the root portion through the aerofoil section of the turbine blade 10. The first wall 14 has an outer face 17 and an inner face 18. The second wall 16 has an inner face 19.

A hole 20 is drilled through the first wall 14 by way of a laser beam 22 focused initially on the outer face 17 of the first wall 14. The laser beam 22 vaporises and melts the material of the first wall 14 to erode and form the hole 20. The act of vaporising material is sometimes known as an ablation process. The laser beam may be provided by a pulsed Nd:YAG laser system, as known in the art, which includes an optical system to focus the laser beam on the outer face 17 initially, and thereafter at the working face of the hole 20, during the drilling process.

The laser beam 22 shown in FIG. 1, having completely drilled the hole 20, has broken through the inner face 18 of the first wall 14. Because of difficulties in measuring the precise moment when the laser beam 22 has broken through the inner face 18, the laser beam has traversed the cavity 12, striking the inner face 19 of the second wall 16. This causes damage to the second wall and is shown as an eroded portion 24 of the second wall 16. This type of damage is known as 'back strike'.

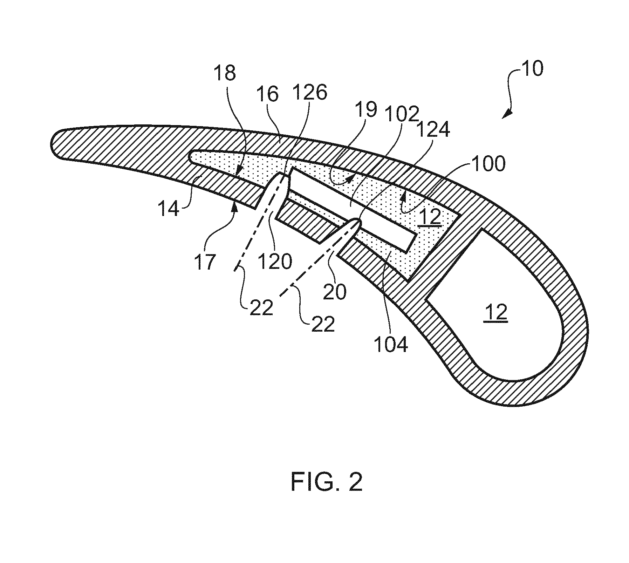

Referring now to FIG. 2 which shows a section through an aerofoil portion of a turbine blade 10 which has had at least one cavity 12, which is filled in order to impede a laser beam 22 used to drill a hole 20. The turbine blade 10 has a first wall 14 and a second wall 16 synonymous with the first and second walls 14, 16 of FIG. 1. The first wall 14 and the second wall 16 have respective inner faces 18, 19. The cavity 12 is bounded by a surface 100 which is, at least in part, defined by the inner faces 18, 19 of the first 14 and second 16 walls.

The cavity 12 space is occupied by a solid element 102 of energy beam resistant material. The solid element 102 is made of a material which is resistant to damage from an energy beam which may be, or may not be, of the type of beam generated by a generation system such as the Nd:YAG laser system mentioned above. The solid element 102 is supported and fixed in position by a two-phase material 104. The two-phase material 104 fills the remaining volume of the cavity 12 not occupied by the solid element 102.

The hole 20 is drilled through the first wall 14 in a similar manner to that described with respect to FIG. 1, by way of a laser beam 22. The laser beam 22 may be generated by a generation system such as the Nd:YAG laser system or may be some other form of energy beam. For example, an electron beam or plasma beam. The bounding surface 100 of the cavity 12, which is susceptible to damage by the laser beam 22, is protected by the laser blocking properties of the solid element 102 and the two-phase material 104 working in tandem. Breaking through of the inner surface 18, to complete the drilled hole 20, results in the laser beam 22 striking the two-phased material 104. The two-phased material 104 may be sufficient to impede the laser beam 22 from travelling further into the cavity 12. However, should all two-phased material 104 in the path of the laser beam 22 be eroded, the laser beam 22 will strike the solid element 102. A portion of the solid element 102, which is a more effective laser blocking barrier than the two-phase material 104, may still be removed in impeding the progress of the laser beam 22 across the cavity 12. The erosion of the two-phased material 104 and the solid element 102 is shown in FIG. 2 as an eroded portion 124. In this instance, the amount of two-phased material 104 eroded by the laser beam 22 will depend on proximity of the solid element 102 to the inner face 18 of the first wall 14.

In the event that the solid element 102 is completely eroded by the laser beam 22, the two-phase material 104, occupying the cavity 12 between the solid element 102 and the inner face 19 of the second wall 16 is also able to impede the progress of the laser beam 22 across the cavity 12.

A second hole 120 is shown in FIG. 2 and further demonstrates the laser blocking properties of the combined solid element 102 and two-phase material 104. The second hole 120 is drilled in a similar manner to hole 20 by the laser beam 22. In this instance, the solid element 102 is too large to provide complete laser blocking in the narrower passage of the cavity 12, adjacent the region where the hole 120 is desired the first wall 14. For this reason, the laser beam 22, upon breaking through the inner face 18, erodes only a relatively small amount of the solid element 102, the two-phase material 104 making up the majority of second eroded portion 126. Thus, in order to drill the second hole 120, a greater proportion of the laser beam 22 blocking has been performed by the two-phase material 104. This means a greater volume of the two-phase material 104, which is a poorer laser beam 22 blocker compared with the solid element 102, will be eroded in drilling the second hole 120 in comparison with drilling the hole 20. It follows then, that the overall volume of the eroded portion 126, will be greater than eroded portion 124 resulting from the drilling of the hole 20.

A comparison of the laser drilling of the hole 20 with that of the second hole 120 shows that, although it is desirable that the solid element 102 should be the primary laser blocking mechanism, the use of the two-phase material 104 provides significant benefit in regions of the cavity 12 where the solid element 102 cannot provide full laser beam 22 blocking. The presence of the two-phase 104 material in the cavity 12 therefore enhances effectiveness of using the solid element 102 as a laser beam 22 blocking method. This is in addition to the benefit the two-phase material 104 provides in fixing the solid element 10 in place in the cavity 12 during the hole 20 drilling process.

The solid element 102 of energy beam resisting material may be a strip, sheet or other shape of polytetrafluoroethylene (PTFE). PTFE has been found to be particularly effective at blocking laser beams 22 in the cavities 12 of hollow components. The PTFE may, or may not, block laser beams in a sacrificial manner and sustain damage in the process. Depending on whether there is damage, and if so, how much damage there is, will determine if the PTFE solid element 102 may be used in another turbine blade 10. The effectiveness of the PTFE solid element 102 in blocking laser beams 22 will depend on the maximum thickness possible for a particular turbine blade 10 geometry. In the case of a thinner PTFE strip forming the solid element 102, a greater reliance may have to be placed on the two-phase material 104 to block the laser beam 22.

The method of the invention utilises a liquid and solid phase exhibited by the two-phase material 104. A wax may be a suitable two-phase material 104 for use in the method. The wax may be suitable because it exhibits some laser beam 22 blocking properties which will help to prevent 'back strike' to the bounding surface 100. When the wax is in the liquid phase it is capable of meeting the requirements of the two-phase material 104 to fill the potentially small and intricate geometry of the cavity 12. When the wax is cooled below freezing point to solidify or harden it remains in the intricate geometry of the cavity and fixes the solid element 104 in position.

The applicant believes another solution is to use a compound based on a sol-gel as the two-phase material 104 in the method of the invention. A sol-gel is capable of exhibiting the required two phases for the method. The sol-gel has a dispersion of particulate material forming a colloidal suspension. Initially the sol (or 'solution') of the sol-gel has a dispersion of the particulate in a liquid. The gel phase secures or locks the particulate material within a gel network. The transformation between the sol and gel occurs when the sol-gel is cooled below its gelation temperature and cross-linking occurs within the liquid. The sol-gel hardens or solidifies into the gel. This is analogous to the wax freezing, which is described above. The use of a sol-gel allows regions of the cavity 12 not being in line-of-sight of the cavity 12 opening to be filled.

It is preferable for the sol-gel to have ceramic particles forming the colloidal suspension. However, a glass particulate may be used. The particles may, or may not, be a fine powder. It is preferably a silica based sol, although other sols, such as an alumina based sol, may be used. The amount of filler or ceramic particles in the sol will depend on the geometry of the cavity 12 that it is required to occupy. For cavities 12 with narrow passages a lower viscosity of sol is easier to apply. Thus a low proportion of ceramic particles in the sol is required. The viscosity, or fluidity, of the sol-gel will depend on the particular component to be drilled. The sol-gel may be more paste-like or runnier depending on the application. In larger passages a thicker slurry of the sol may be used incorporating a larger proportion of particles. The ceramic is preferably alumina although other ceramics such as silica, zirconia or yttria may be used alone or in combination.

The reduction of the sol-gel below the gelling transition temperature results in the silica precipitating from the sol, hardening and forming the gel. The gel has solidified from the sol. The hardness of the gel will depend upon the specific amounts of materials used to make up the sol-gel and the dispersed particles in the sol. The gel holds the ceramic particles together in an un-sintered green form. This form is held, even if the gel is raised above the original sol-gel transition temperature (i.e. thawing). The gel may be dried or dehydrated at this stage to remove excess water. The dehydration process used may define the volume of the dried green form. Optionally, the gel may be fired in a furnace to sinter the ceramic particles making the two-phase material 104 a sintered core. However, this increases process time and may make the two-phased material 104 sintered core difficult to remove from the cavity 12 upon the completion of the laser drilling process. The gel may be used as the two-phased material 104 in the method of the invention in either the green or sintered form. Where the two-phased material 104 remains in its un-sintered green form it may be used in a hydrated (un-dried) or dehydrated state.

Removal of the two-phased material 104 as a gel in green or sintered form is necessary after laser beam 22 drilling. This can be achieved by leaching with a caustic solution at high temperature at or below atmospheric pressure, or by an open-leaching process utilising potash and caustic solution. If the gel remains in its green form (un-sintered), it may be additionally possible, and a simpler process, to use hot water at high pressure to remove it from the cavity 12. Intricate cavity 12 geometries may still require a caustic solution treatment however.

To drill the hole 20 in the turbine blade 10 the method requires the cavity 12 be filled to prevent damage to the bounding surface 100. The solid element 102, which may be the PTFE strip or sheet described above, is then inserted into the cavity 12. The solid element 102 will be of the appropriate size to pass through the smallest or narrowest orifice of the turbine blade 10. This may, or may not, be the same size restriction exhibited by the cavity 12.

The two-phase material 104 will then be inserted into the cavity 12 in liquid phase. In the preferred embodiment of the invention the two-phase material 104 will be a sol-gel described above, but may be a wax or other suitable compound. Filling the volume of the cavity 12 with the two-phased material 104 in liquid phase may be assisted by the use of a funnel, syringe or other injection machine. The cavity 12 may be evacuated of air to aid the application of the two-phased material 104 into any intricate passages of the cavity 12. This may be especially required where the two-phased material 104 is of the more viscous thicker slurry ceramic sol-gel described above. Where the two-phased material 104 is a sol-gel, assistance to ensure the entire remaining volume of the cavity 12 not occupied by the solid element 102 is completely filled, may be provided by vibrating the turbine blade 10. This is because the thixotropic nature of the sol-gel, particularly of the more viscous slurry type sol-gel. The vibrations, temperature or agitation, reduce the viscosity, or increase fluidity, of the two-phased material 104. This also applies if the two-phased material 104 is any other thixotropic compound than a sol-gel. The vibrations ensure trapped air is released from the cavity 12 through the liquefied sol-gel.

The solid element 102 may be inserted into the cavity 12 before or after the two-phased material 104, which is in the liquid phase. If the solid element 102 is inserted prior to the two-phase material 104, then the two-phased material will need to be poured or injected around the solid element 102 to completely fill the cavity 12. Alternatively, the solid element 102 will need to be dipped, or inserted, through the two-phased material 104 if the order of insertion is reversed. This may mean the need to accurately calculate the volume required of two-phase material 104. It may also be necessary to provide dams at the ends of the turbine blade 10. The dams may be necessary to prevent the two-phase material 104 leaking from the cavity 12 prior to entering the solid phase. This will be of particular consideration if the cavity 12 or passages extend entirely from the root to the tip of the turbine 10.

Upon both the solid element 102 and the two-phased material 104 being present in the cavity 12, the two-phased material 104 may be cooled below its phase transition temperature. This solidifies the two-phase material 104, locking or fixing the solid element 102 in position so that the cavity 12 has the completed laser beam 22 blocking system in place. The secured solid element 102 and the two-phased material 104 form a superior laser beam 22 blocking barrier in comparison with either the solid element 102 or the two-phased material 104 acting in isolation. The laser drilling operation to form the holes 20, 120 is now performed.

The combination of the solid element 102 and forming the laser beam 22 blocking barrier allows the use of trepanning laser drilling as the drilling process. Neither of these laser blocking methods would allow trepan drilling of turbine blades when used in isolation. This is due to the more durable nature of the solid element 102 and the two-phased material 104 when working in tandem. The two-phased material 104, especially where it is a sol-gel based compound, protects regions of the cavity 12 that the solid element 102, such as a PTFE strip, cannot reach.

Following the drilling process the cavity 12 is cleaned and the laser blocking barrier is removed. If the two-phase material 104 is a sol-gel the cleaning process will be performed by one of the methods described above. The solid element 102 may be recycled where possible. It is an additional benefit of using the two-phased material 104 in concert with the solid element 102 that the resulting debris of the drilling process is captured by the two-phase material 104. Thus the drilling debris is removed from the turbine blade 10 or similar component during the cleaning process. This makes for a one-step process for cleaning the laser blocking barrier and cleaning away the drilling debris.

It will be appreciated that the invention finds application in fields outside those of gas turbines where it is desirable to protect components upon breakthrough of a laser or other high energy beam. Within the gas turbine field other components such as nozzle guide vanes, compressor blades, combustors and casings may benefit from the invention. It should also be appreciated that other laser machining operations may employ the method of the invention, for example, ablation, sublimation or laser cutting.

Advantageously, the strip of PTFE can be inserted and located in the sol-gel nearer the cavity surface through which the holes are drilled than the opposite surface. Thus positioning the PTFE strips very close to the target wall surface means that a greater area of the back wall or opposite wall is protected.

Referring to FIG. 2, the inner face 19, as noted above, defines at least a part of, or portion of, the bounding surface 100 (of the cavity 12) that is to be protected from damage by the solid element 102 and the two-phase material 104. The solid element 102 can be inserted so that it is nearer to the inner face 18 of the first wall 14 than it is to the inner face 19 of the second wall 16. In other words, the solid element 102 can be inserted so that it is nearer to the inner face 18 than it is to the portion of the bounding surface 100 that is to be protected from damage from the laser beam 22. Thus, when the hole 20 is drilled through the first wall 14, a greater area of the portion of the surface 100, than the area of the solid element 102, is protected from the laser beam 22. In other words, the solid element 102 casts a larger 'protection-shadow' area on the surface 100 than the area of the said element itself. Therefore, a relatively small solid element 102 can be used to protect the surface 100 enabling this small solid element 102 to be inserted through the small cooling air holes. This advantage is only possible where the solid element is held away from the surfaces by the two-phased material 104.

The described method is also beneficial in that at least two or multiple strips of PTFE may be inserted accurately into the cavity. This is particularly advantageous where an entry hole to the cavity is relatively small.

## Claims

1. A method of drilling a hole in a wall of a component, the component defining a cavity, the cavity having a surface, the method having the steps of:
inserting a two-phased material into the cavity;
inserting at least one solid element of energy beam resistant material into the cavity;
solidifying the two-phased material to secure the solid element in a fixed position; and
drilling the hole with an energy beam wherein the surface of the cavity is protected from damage by at least one of the two-phase material or the solid element of energy beam resistant material.

2. A method as claimed in claim 1 wherein the step of inserting the at least one solid element into the cavity comprises positioning the at least one solid element so that it is a distance away from the surface of the cavity.

3. A method as claimed in claim 1 or 2 wherein the step of inserting the at least one solid element into the cavity comprises positioning the at least one solid element so that it is nearer to the wall through which the hole is to be drilled than it is to the portion of the surface of the cavity which is to be protected from damage.

4. A method as claimed in any one of claims 1 to 3 wherein two or more solid elements are inserted into the cavity.

5. A method as claimed in any one of claims 1 to 4 wherein the at least one solid element is inserted into the cavity and then the two-phased material is inserted into the cavity.

6. A method as claimed in any of claims 1 to 5 wherein the method comprises the step of capturing drilling particulates within the two-phase material.

7. A method as claimed in any of claims 1 to 6 wherein the at least one solid element is a polytetrafluoroethylene (PTFE) elongated strip.

8. A method as claimed in any of claims 1 to 7 wherein the two-phased material is a wax.

9. A method as claimed in any of claims 1 to 7 wherein the two-phased material is a sol-gel based compound and the step of solidifying the two-phased material forms a gel from the sol-gel based compound.

10. A method as claimed in claim 9 wherein the sol-gel is a silica or alumina based sol.

11. A method as claimed in claim 9 or 10 wherein the sol-gel based compound comprises a particulate material dispersed within the sol and the gel secures the particulate in an un-sintered green-form.

12. A method as claimed in claim 11 wherein the particulate material is a ceramic or a glass material.

13. A method as claimed in claim 11 or 12 wherein the method further comprises sintering the green-form.

14. A method as claimed in any of the previous claims wherein the method comprises the step of removing the two-phase material and the at least one solid element from the cavity and is performed by washing and/or leaching.

15. A method as claimed in any preceding claim wherein the component is selected from a group comprising a turbine blade, a vane or a gas turbine engine component.
